(19) Europäisches Patentamt
European Patent Office
Office européen des brevets

(11) EP 3 253 484 B1

(12) **FASCICULE DE BREVET EUROPEEN**

(45) Date de publication et mention de la délivrance du brevet:
**21.04.2021 Bulletin 2021/16**

(21) Numéro de dépôt: **16705248.9**

(22) Date de dépôt: **29.01.2016**

(51) Int Cl.:
*B01J 20/18 (2006.01)* *B01J 20/16 (2006.01)*
*B01J 20/28 (2006.01)* *B01D 53/02 (2006.01)*
*B01D 53/04 (2006.01)* *B01D 53/26 (2006.01)*
*B01D 53/047 (2006.01)* *C01B 39/22 (2006.01)*
*B01J 39/14 (2006.01)*

(86) Numéro de dépôt international:
**PCT/FR2016/050198**

(87) Numéro de publication internationale:
**WO 2016/124843 (11.08.2016 Gazette 2016/32)**

(54) **UTILISATION D'ADSORBANTS ZEOLITHIQUES DE HAUTE SURFACE EXTERNE**

VERWENDUNG VON ZEOLITHISCHEN ADSORPTIONSMITTELN MIT EINER GROSSEN EXTERNEN OBERFLÄCHE

USE OF ZEOLITE ADSORBENTS HAVING A HIGH EXTERNAL SURFACE AREA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.02.2015 FR 1550783**

(43) Date de publication de la demande:
**13.12.2017 Bulletin 2017/50**

(73) Titulaire: **ARKEMA FRANCE**
**92700 Colombes (FR)**

(72) Inventeurs:
- **VITTENET, Jullian**
**34400 Lunel (FR)**
- **ORTIZ, Guillaume**
**64000 Pau (FR)**
- **NICOLAS, Serge**
**64000 PAU (FR)**
- **BOUVIER, Ludivine**
**64300 Orthez (FR)**
- **LUTZ, Cécile**
**64290 Gan (FR)**

(56) Documents cités:
**FR-A1- 2 516 499 US-B1- 6 168 720**

- **AMRAN N N ET AL: "Nitrogen physical adsorption and adsorption equilibrium for natural gas dehydration on zeolite 3A and 4A", NATIONAL POSTGRADUATE CONFERENCE (NPC), 2011, IEEE, 19 septembre 2011 (2011-09-19), pages 1-5, XP032099552, DOI: 10.1109/NATPC.2011.6136250 ISBN: 978-1-4577-1882-3**
- **CHRISTOPH PAHL ET AL: "Adsorptive Water Removal from Primary Alcohols and Acetic Acid Esters in the ppm-Region", JOURNAL OF CHEMICAL AND ENGINEERING DATA., vol. 57, no. 9, 7 août 2012 (2012-08-07), pages 2465-2471, XP055241345, US ISSN: 0021-9568, DOI: 10.1021/je3005694**
- **DAVID PERALTA ET AL: "Separation of C6 Paraffins Using Zeolitic Imidazolate Frameworks: Comparison with Zeolite 5A", INDUSTRIAL & ENGINEERING CHEMISTRY RESEARCH., vol. 51, no. 12, 5 mars 2012 (2012-03-05), pages 4692-4702, XP055241575, US ISSN: 0888-5885, DOI: 10.1021/ie202995g**
- **SE-IL YANG ET AL: "Hydrogen separation by multi-bed pressure swing adsorption of synthesis gas", ADSORPTION, KLUWER ACADEMIC PUBLISHERS, BO, vol. 14, no. 4-5, 10 mai 2008 (2008-05-10) , pages 583-590, XP019598540, ISSN: 1572-8757**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 253 484 B1

## Description

L'invention concerne l'utilisation de matériaux adsorbants zéolithiques sous forme d'agglomérés comprenant au moins une zéolithe de type A, les dits adsorbants présentant une importante surface externe caractérisée par adsorption d'azote, et un volume microporeux élevé, pour la séparation en phase gaz, en particulier dans des procédés modulés en pression, soit de type PSA (Adsorption modulée en pression ou « Pressure Swing Adsorption » en langue anglaise) soit de type VSA (Adsorption modulée en vide ou « Vacuum Swing Adsorption » en langue anglaise), soit de type VPSA (procédé hybride des 2 précédents), soit de type RPSA (« Rapid Pressure Swing Adsorption » en langue anglaise), dans des procédés modulés en température de type TSA (Adsorption modulée en température ou « Temperature Swing Adsorption » en langue anglaise) et/ou dans des procédés modulés en pression et en température de type PTSA (Adsorption modulée en Pression et en Température ou « Pressure and Temperature Swing Adsorption » en langue anglaise).

La présente invention concerne également un procédé de séparation et de purification de gaz utilisant lesdits adsorbants zéolithiques présentant une importante surface externe.

L'invention concerne également des matériaux adsorbants zéolithiques utilisables dans le cadre de la présente invention, comprenant du potassium et/ou du calcium et/ou du sodium.

L'utilisation de ce type d'agglomérés est particulièrement avantageuse dans les applications où la cinétique de transfert, la capacité volumique d'adsorption, paramètres déterminants pour l'efficacité et la productivité globale du procédé, ainsi que de faibles pertes de charge sont recherchées.

Dans les technologies de séparation par adsorption, beaucoup d'efforts ont été consentis ces dernières années pour augmenter la productivité horaire des lits d'adsorbants, notamment en augmentant la fréquence des cycles d'adsorption/désorption, ce qui signifie que l'adsorbant mis en oeuvre, en plus de ses propriétés thermodynamiques d'adsorption, doit pouvoir se saturer par adsorption et restituer à la désorption le gaz adsorbé dans des laps de temps de plus en plus courts. Les adsorbants doivent donc être conçus de manière à avoir un transfert de masse le plus efficace possible, c'est-à-dire de telle sorte que les gaz à séparer ou à purifier atteignent le plus rapidement possible les sites d'adsorption et soient également désorbés le plus rapidement possible.

Plusieurs pistes ont été explorées pour atteindre cet objectif. La première méthode proposée par la littérature consiste à diminuer la taille des particules adsorbantes. Il est généralement admis que ceci a pour effet de permettre une diffusion plus rapide des gaz dans le réseau macroporeux, la constante cinétique de transfert de matière étant inversement proportionnelle au carré du diamètre des particules (ou dimension équivalente, selon la morphologie des adsorbants). On citera par exemple l'article « Adsorbent particle size effects in the separation of air by rapid pressure swing adsorption », de E. Alpay et coll., Chemical Engineering Science, 49(18), 3059-3075, (1994).

Le document WO2008/152319 décrit la préparation, par atomisation, d'adsorbants résistants mécaniquement de petites tailles, qui sont par exemple utilisés dans des concentrateurs portables d'oxygène médical, comme le montre le document US2013/0216627. Le principal inconvénient de la réduction de la taille des particules adsorbantes est l'augmentation des pertes de charge dans les adsorbeurs et la consommation énergétique importante qui y est associée. Ceci est particulièrement rédhibitoire dans les procédés d'adsorption de production industrielle de gaz.

La deuxième méthode consiste à améliorer l'aptitude au transfert intra-granulaire des adsorbants, sans changer leur taille. Les demandes internationales JP2157119, JP2002068732 et WO2002/49742 décrivent des adsorbants à cinétique améliorée obtenus par conversion en matière active zéolithique du liant d'agglomération ainsi que les procédés associés de séparation de gaz, plus efficaces qu'avec des particules classiques.

Le document WO2008/051904 propose un procédé de fabrication par extrusion/sphéronisation de billes d'adsorbants zéolithiques à base de zéolithes à diffusion améliorée. Le document WO2008/109882 décrit quant à lui la préparation d'adsorbants à haute résistance mécanique et à transfert de masse amélioré à partir de zéolithes et de moins de 15% de liant silicique introduit sous forme colloïdale.

La demande EP1240939 propose de sélectionner pour des utilisations en procédé PSA ou VSA des adsorbants présentant un certain rapport entre leurs constantes cinétiques de transport des composés adsorbables dans la phase gazeuse et dans la phase solide. Le document US6328786 définit un seuil minimal de résistance mécanique et un coefficient cinétique au-delà duquel les adsorbants sont préférés pour une utilisation en procédé PSA. La demande EP1048345 décrit des adsorbants à macroporosité élevée fabriqués par une technique de sphéronisation et de lyophilisation. Le document FR2516499 divulgue l'utilisation pour le séchage d'un hydrocarbure d'agglomérés sans liant, sous forme de billes à base de zéollithes de type 3A.

Une troisième méthode consiste à améliorer l'accès à l'adsorbant en utilisant différentes géométries de mise en forme combinant à la fois des épaisseurs réduites de matière active et des sections de passage du fluide suffisamment larges pour permettre un écoulement avec des pertes de charges limitées. On peut citer les feuilles et tissus adsorbants, les monolithes de type nids d'abeille, mousses ou autres.

Le document FR2794993 propose d'utiliser des billes hétérogènes, avec une couche périphérique adsorbante de faible épaisseur enrobant un cœur inerte : la distance de diffusion est donc réduite, sans augmenter les pertes de charges. Ce système a le défaut d'être d'une faible efficacité volumique : une partie conséquente de l'adsorbeur est occupée par de la matière inerte au sens de l'adsorption, ce qui a un impact important en termes de dimensions des installations et donc d'investissements, voire de poids, ce qui peut être gênant, dans le cas d'appareil de purification/séparation portatifs, tels que par exemple les concentrateurs d'oxygène médical.

Les demandes de brevets US2012/0093715 et US2013/0052126 enseignent que l'on peut former des structures zéolithiques monolithiques avec une structure hiérarchisée, par ajout d'un polymère au milieu réactionnel de synthèse : comme pour les feuilles et les tissus adsorbants, les solides obtenus présentent un volume macroporeux et un volume mésoporeux très importants, ces solides sont donc très peu denses et leur efficacité volumique est faible, du fait de leur faible capacité d'adsorption volumique.

Ainsi, toutes ces géométries adsorbantes de diverses natures posent des problèmes de mise en œuvre relativement complexe, de tenue mécanique à la fatigue ou à l'attrition et de faible efficacité volumique, puisque la teneur en matière active est souvent réduite au profit de liants inertes ou autre fibres de renforcement mécanique ou puisque les matériaux obtenus sont très peu denses.

Il reste donc un besoin pour des adsorbants zéolithiques utiles pour la séparation et la purification des gaz possédant de bonnes propriétés de transfert qui ne présentent pas les inconvénients liés à l'utilisation des adsorbants de l'art antérieur. En particulier, il reste un besoin pour un adsorbant zéolithique possédant de plus grandes capacités d'adsorption et de meilleures cinétiques d'adsorption/désorption, permettant en particulier une utilisation plus intensive des procédés, et notamment des procédés PSA, TSA ou VPSA.

Les inventeurs ont maintenant découvert que les objectifs précités peuvent être atteints en totalité ou au moins en partie grâce aux adsorbants spécifiquement dédiés aux utilisations de séparation et de purification des gaz tels qu'ils vont être décrits maintenant.

Ainsi, et selon un premier aspect, l'invention concerne l'utilisation pour la séparation et/ou le séchage de gaz, d'au moins un matériau adsorbant zéolithique sous forme d'agglomérés issus d'une agglomération avec au moins un liant organique ou minéral, comprenant au moins une zéolithe de type A mésoporeuse présentant un ratio Si/Al, mesuré par Résonance Magnétique Nucléaire (RMN) solide du silicium 29, égal à 1,00 +/- 0,05, et une surface externe, mesurée par adsorption d'azote, comprise entre 40 $m^2.g^{-1}$ et 400 $m^2.g^{-1}$, de préférence entre 60 $m^2.g^{-1}$ et 200 $m^2.g^{-1}$, bornes incluses, la surface externe étant la différence entre la surface BET et la surface microporeuse, la surface microporeuse étant calculée par la méthode du t-plot, ledit adsorbant présentant :

- une surface externe, mesurée par adsorption d'azote et exprimée en $m^2$ par gramme d'adsorbant, entre 40 $m^2.g^{-1}$ et 200 $m^2.g^{-1}$, et tout particulièrement entre 50 $m^2.g^{-1}$ et 200 $m^2.g^{-1}$, la surface externe étant la différence entre la surface BET et la surface microporeuse, la surface microporeuse étant calculée par la méthode du t-plot
- une teneur en phase non zéolithique (PNZ), telle que 0 < PNZ ≤ 30%, de préférence 3% s PNZ ≤ 25%, de préférence encore 3% s PNZ ≤ 20%, avantageusement 5% ≤ PNZ ≤ 20%, mieux encore 7% ≤ PNZ ≤ 18%, mesurée par DRX (Diffraction par Rayons X), en poids par rapport au poids total de l'adsorbant,
- un volume mésoporeux, déterminé par la méthode Barrett-Joyner-Halenda (BJH) en appliquant la norme ISO 15901-2 (2007), compris entre 0,07 $cm^3.g^{-1}$ à 0,18 $cm^3.g^{-1}$, de préférence entre 0,10 $cm^3.g^{-1}$ et 0,18 $cm^3.g^{-1}$, et de préférence encore entre 0,12 $cm^3.g^{-1}$ et 0,18 $cm^3.g^{-1}$, de préférence encore entre 0,14 $cm^3.g^{-1}$ et 0,18 $cm^3.g^{-1}$, bornes incluses,
- un rapport (Vmicro - Vméso)/Vmicro compris entre -0,3 et 1,0, bornes non incluses, de préférence entre -0,1 et 0,9, bornes non incluses, de préférence entre 0 et 0,9, bornes non incluses, de préférence encore entre 0,2 et 0,8, bornes non incluses, de préférence encore entre 0,4 et 0,8, bornes non incluses, de manière préférée entre 0,6 et 0,8, bornes non incluses, où Vmicro est le volume microporeux mesuré par la méthode de Dubinin-Raduskevitch et Vméso est le volume mésoporeux déterminé par la méthode Barrett-Joyner-Halenda (BJH),
- et de ratio atomique Si/Al de l'adsorbant, mesuré par fluorescence de rayons X selon la norme NF EN ISO 12677 (2011), compris entre 1,0 et 2,0, de préférence entre 1,0 et 1,6, et de manière tout à fait préférée, entre 1,0 et 1,4,

l'ensemble des mesures étant effectuées sur le matériau adsorbant échangé à au moins 90% au calcium.

Dans la présente description, le terme « zéolithe de type A » désigne une zéolithe LTA. Selon un mode de réalisation préféré, la zéolithe de type A est une zéolithe A mésoporeuse choisie parmi les zéolithes 3A, 4A et 5A. Par « 3A », on entend une zéolithe dont l'ouverture de pores est égale à environ 3Å ; par « 4A », on entend une zéolithe dont l'ouverture de pores est égale à environ 4Å ; et par « 5A », on entend une zéolithe dont l'ouverture de pores est égale à environ 5 Å.

Selon un mode de réalisation de l'invention, le matériau adsorbant zéolithique peut également comprendre une ou plusieurs autres zéolithe(s) choisie(s) parmi les zéolithes de type FAU (LSX, MSX, X, Y), de type LTA, de type CHA (Chabazite), de type HEU (Clinoptilolite), et les mélanges de deux ou plusieurs d'entre elles, et de préférence encore parmi les zéolithes 3A, 4A, 5A, et les mélanges de deux ou plusieurs d'entre elles.

D'autres zéolithes peuvent être présentes en quantités minoritaires dans les adsorbants de l'invention ou utilisables dans le procédé de l'invention. Ces zéolithes peuvent être considérées comme des polluants, notamment en raison du fait qu'elles ne contribuent pas à l'adsorption des gaz, autrement dit qu'elles sont inertes vis-à-vis de l'adsorption des gaz. Ces zéolithes comprennent, à titre d'exemples non limitatifs, la sodalite, l'hydroxysodalite, la zéolithe P, et autres zéolithes inertes vis-à-vis de l'adsorption des gaz.

Les différents types de zéolithes présentes dans le matériau adsorbant zéolithique sont déterminés par DRX. La quantité de zéolithes est également mesurée par DRX et est exprimée en % en poids par rapport au poids total du matériau adsorbant zéolithique.

En corollaire, dans la présente invention, le terme « phase non zéolithique » (ou « PNZ ») désigne toute phase présente dans le matériau adsorbant, autre que la ou les zéolithe(s) définie(s) ci-dessus, dénommé « phase zéolithique » ou « PZ ». La quantité de phase non zéolithique est exprimée par le complément à 100% de la phase zéolithique de l'adsorbant, autrement dit :

$$\%PNZ = 100 - \%PZ,$$

où %PNZ représente le pourcentage en poids de PNZ et %PZ le pourcentage en poids de phase zéolithique, par rapport au poids total de l'adsorbant.

Par « adsorbant échangé à au moins 90% au calcium », on entend qu'au moins 90% des sites cationiques échangeables de la phase zéolithique sont occupés par des cations calcium.

Ce matériau adsorbant zéolithique échangé à au moins 90% au calcium peut être obtenu et de préférence est obtenu selon le protocole suivant : le matériau adsorbant zéolithique à échanger au calcium est introduit dans une solution de chlorure de calcium à 0,5 mole de $CaCl_2$ par litre, à 70°C, pendant 2 heures, avec un rapport liquide sur solide de 10 $mL.g^{-1}$. L'opération est répétée *n* fois, *n* étant au moins égal à 1, de préférence au moins égal à 2, de préférence au moins égal à 3, de préférence encore au moins égal à 4.

Les solides issus des opérations d'échange *n*-1 et *n* sont successivement lavés quatre fois par immersion dans de l'eau à raison de 20 $mL.g^{-1}$ pour éliminer les excès de sel, puis séchés pendant 12 heures à 80°C sous air, avant d'être analysés par fluorescence X. Si le pourcentage massique en oxyde de calcium du matériau adsorbant zéolithique, entre les opérations d'échange *n*-1 et *n,* est stable à $\pm$ 1%, ledit matériau adsorbant zéolithique est considéré comme étant « dans sa forme échangée à au moins 90% au calcium ». Le cas échéant, on procède à des échanges supplémentaires tels que décrit précédemment jusqu'à obtention d'une stabilité du pourcentage massique en oxyde de calcium de $\pm$ 1%.

On pourra notamment procéder à des échanges cationiques batch successifs, avec un large excès de chlorure de calcium, jusqu'à ce que la teneur massique en oxyde de calcium du matériau adsorbant zéolithique, déterminé par analyse chimique de type fluorescence X, soit stable à $\pm$ 1%. Cette méthode de mesure est explicitée plus loin dans la description.

Le ratio atomique Si/Al du matériau adsorbant zéolithique est mesuré par analyse chimique élémentaire en fluorescence X, technique bien connue de l'homme du métier et explicitée plus loin dans la description.

On procède si nécessaire à l'échange calcium avant analyses selon le mode opératoire détaillé ci-dessus. À partir du volume microporeux selon Dubinin-Raduskevitch mesuré sur le matériau adsorbant zéolithique échangé au calcium, on peut donc calculer un volume de Dubinin-Raduskevitch global de(s) zéolithe(s) A, pondéré de la PNZ.

Par « Vmicro », on entend le volume microporeux du matériau adsorbant zéolithique dont la technique de mesure est explicitée plus loin. Par « Vméso », on entend le volume mésoporeux du matériau adsorbant zéolithique dont la technique de mesure est explicitée plus loin.

Comme indiqué précédemment, ledit au moins un matériau adsorbant zéolithique utilisable dans le cadre de la présente invention présente un rapport (Vmicro - Vméso)/Vmicro compris entre -0,3 et 1,0, bornes non incluses, de préférence entre -0,1 et 0,9, bornes non incluses, de préférence entre 0 et 0,9, bornes non incluses, de préférence encore entre 0,2 et 0,8, bornes non incluses, de préférence encore entre 0,4 et 0,8, bornes non incluses, de manière préférée entre 0,6 et 0,8, bornes non incluses, où Vmicro est le volume microporeux mesuré par la méthode de Dubinin-Raduskevitch et Vméso est le volume mésoporeux déterminé par la méthode Barrett-Joyner-Halenda (BJH), l'ensemble des mesures étant effectuées sur le matériau adsorbant échangé à au moins 90% au calcium.

Selon encore un autre mode de réalisation, ledit au moins un matériau adsorbant zéolithique présente un volume microporeux (Vmicro, ou encore volume de Dubinin-Raduskevitch), exprimé en $cm^3$ par gramme de matériau adsorbant, compris entre 0,160 $cm^3.g^{-1}$ et 0,280 $cm^3.g^{-1}$, de préférence entre 0,180 $cm^3.g^{-1}$ et 0,280 $cm^3.g^{-1}$, de préférence entre 0,200 $cm^3.g^{-1}$ et 0,280 $cm^3.g^{-1}$, de préférence encore 0,220 $cm^3.g^{-1}$ et 0,280 $cm^3.g^{-1}$, mesuré sur le matériau adsorbant échangé à au moins 90% au calcium.

Le volume total des macro- et méso-pores des matériaux adsorbants zéolithiques utilisable dans le cadre de la présente invention, mesuré par intrusion de mercure, est avantageusement compris entre 0,15 $cm^3.g^{-1}$ et 0,50 $cm^3.g^{-1}$, de préférence compris entre 0,20 $cm^3.g^{-1}$ et 0,40 $cm^3.g^{-1}$ et de manière très préférée compris entre 0,20 $cm^3.g^{-1}$ et 0,35 $cm^3.g^{-1}$, les mesures étant réalisées sur le matériau adsorbant échangé à au moins 90% au calcium.

La fraction en volume des macropores du matériau adsorbant zéolithique utilisable dans le cadre de la présente invention est de préférence comprise entre 0,20 et 1,00 du volume total des macro- et méso-pores, de manière très préférée comprise entre 0,40 et 0,80, et de manière encore plus préférée entre 0,45 et 0,65 bornes incluses, les mesures étant réalisées sur le matériau adsorbant zéolithique échangé à au moins 90% au calcium.

Les matériaux adsorbants zéolithiques utilisables dans le cadre de la présente invention sont soit connus ou peuvent être préparés à partir de modes opératoires connus, ou encore sont nouveaux et à ce titre font partie intégrante de la présente invention.

Selon encore un mode de réalisation préféré, l'utilisation selon l'invention met en œuvre un matériau adsorbant zéolithique comprenant au moins une zéolithe de type A mésoporeuse. Par « mésoporeuse », on entend une zéolithe qui présente, conjointement à la microporosité inhérente à la structure de la zéolithe, des cavités internes de taille nanométrique (mésoporosité), facilement identifiables par observation au moyen d'un microscope électronique à transmission (MET ou « TEM » en langue anglaise), comme décrit par exemple dans US7785563.

Plus précisément, ladite zéolithe A du matériau adsorbant zéolithique est une zéolithe A mésoporeuse, c'est-à-dire une zéolithe présentant une surface externe, définie par la méthode du t-plot décrite plus loin, comprise entre 40 $m^2.g^{-1}$ et 400 $m^2.g^{-1}$, de préférence entre 60 $m^2.g^{-1}$ et 200 $m^2.g^{-1}$, bornes incluses. Par extension, au sens de la présente invention, une « zéolithe non mésoporeuse » est une zéolithe présentant éventuellement une surface externe, définie par la méthode du t-plot décrite plus loin, strictement inférieure à 40 $m^2.g^{-1}$.

En particulier, les matériaux adsorbants zéolithiques utilisables dans le cadre de la présente invention comprennent au moins une zéolithe de type A, dans laquelle ladite au moins une zéolithe de type A présente un ratio Si/Al égal à 1,00 +/- 0,05, ledit ratio Si/Al étant mesuré par Résonance Magnétique Nucléaire (RMN) solide du silicium 29 (RMN $^{29}Si$), selon les techniques bien connues de l'homme du métier, comme indiqué plus haut.

Le ratio Si/Al de chacune des zéolithes présente(s) dans l'adsorbant est mesuré également par RMN du solide.

Selon un mode de réalisation préféré, la zéolithe A du matériau adsorbant zéolithique se présente sous forme de cristaux dont le diamètre moyen en nombre, mesuré au microscope électronique à balayage (MEB), est inférieur à 20 μm, de préférence compris entre 0,1 μm et 20 μm, de préférence compris entre 0,1 et 10 μm, de préférence compris entre 0,5 μm et 10 μm, de manière plus préférée compris entre 0,5 μm et 5 μm, bornes incluses.

Selon encore un autre mode de réalisation préféré, ledit matériau adsorbant zéolithique comprend au moins un cation choisi parmi les ions des Groupes IA, IIA, IIIA, IB, IIB, IIIB de la classification périodique, les ions trivalents de la série des lanthanides ou terres-rares, l'ion zinc (II), l'ion argent (I), l'ion cuivrique (II), l'ion chromique (III), l'ion ferrique (III), l'ion ammonium et/ou l'ion hydronium, les ions préférés étant les ions calcium, lithium, sodium, potassium, baryum, césium, strontium, zinc et terres-rares et de préférence encore les ions sodium, calcium et potassium, et leurs mélanges.

Selon la présente invention, les matériaux adsorbants zéolithiques décrits ci-dessus se montrent tout particulièrement adaptés et efficaces dans les procédés pour la séparation et/ou le séchage en phase gaz, en particulier dans des procédés modulés en pression, soit de type PSA, soit de type VSA, soit de type VPSA, soit de type RPSA, soit de type TSA et/ou dans des procédés de type PTSA.

Plus précisément, la présente invention concerne l'utilisation d'au moins un matériau adsorbant zéolithique, comprenant au moins une zéolithe de type A, comme défini ci-dessus, pour le séchage et/ou la séparation de gaz, dit plus généralement simplement « séparation de gaz ». Par séparation de gaz, on entend séchage, purification, pré-purification, élimination, et autres séparations d'un ou plusieurs composés gazeux présents dans un mélange d'un ou plusieurs composés gazeux. Plus spécifiquement, par « séchage » on entend le piégeage sélectif, par adsorption avec le matériau adsorbant zéolithique, des molécules d'eau présentes dans un milieu gazeux. Le terme « séchage » est ainsi compris dans la définition de la présente description du terme « séparation », le terme « séchage » devant être interprété comme la séparation, d'un milieu gazeux, des molécules d'eau comprises dans ledit milieu gazeux.

Selon un aspect préféré de la présente invention, les matériaux adsorbants zéolithiques utilisables pour le séchage et la purification des gaz sont des matériaux ne générant que peu de pertes de charge ou des pertes de charge acceptables pour les utilisations précitées.

On préfère ainsi les matériaux adsorbants zéolithiques agglomérés et mis en forme réalisés selon toutes techniques connues de l'homme du métier telles qu'extrusion, compactage, agglomération sur assiette granulatrice, tambour granulateur, atomisation et autres. Les proportions de liant d'agglomération et de zéolithes mises en œuvre sont typiquement celles de l'art antérieur, c'est-à-dire comprises entre 5 parties et 30 parties en poids de liant pour 95 parties à 70 parties en poids de zéolithe.

Le matériau adsorbant zéolithique utilisable dans le cadre de la présente invention, qu'il soit sous forme de billes, d'extrudés ou autres, présente en général un diamètre volumique moyen, ou une longueur moyenne (plus grande dimension lorsqu'il n'est pas sphérique), inférieur ou égal à 7 mm, de préférence compris entre 0,05 mm et 7 mm, de manière encore préférée compris entre 0,2 mm et 5,0 mm et plus préférentiellement entre 0,2 mm et 2,5 mm.

Les matériaux adsorbants zéolithiques utiles dans le contexte de la présente invention présentent en outre des propriétés mécaniques tout particulièrement appropriées aux applications auxquels ils sont destinés, c'est-à-dire :

- soit une résistance à l'écrasement en lit (REL) mesurée selon la norme ASTM 7084-04 comprise entre 0,5 MPa et 3 MPa, de préférence entre 0,75 MPa et 2,5 MPa, pour un matériau de diamètre volumique moyen (D50) ou une longueur (plus grande dimension lorsque le matériau n'est pas sphérique), inférieur(e) à 1 mm, bornes incluses,
- soit une résistance à l'écrasement en grain, mesurée selon les normes ASTM D 4179 (2011) et ASTM D 6175 (2013), comprise entre 0,5 daN et 30 daN, de préférence comprise entre 1 daN et 20 daN, pour un matériau de diamètre volumique moyen (D50) ou une longueur (plus grande dimension lorsque le matériau n'est pas sphérique), supérieur(e) ou égal(e) à 1 mm, bornes incluses.

Selon un autre mode de réalisation préféré, l'utilisation selon l'invention met en œuvre au moins un matériau adsorbant zéolithique présentant une capacité volumique d'adsorption élevée, c'est-à-dire un volume microporeux volumique exprimé en $cm^3.cm^{-3}$ de matériau adsorbant échangé à au moins 90% au calcium, ledit volume microporeux volumique étant supérieur à 0,01 $cm^3.cm^{-3}$, de préférence supérieur à 0,02 $cm^3.cm^{-3}$, de préférence encore supérieur à 0,03 $cm^3.cm^{-3}$, de manière encore préférée supérieur à 0,04 $cm^3.cm^{-3}$, de préférence encore supérieur à 0,05 $cm^3.cm^{-3}$.

Selon encore un autre mode de réalisation, l'utilisation selon l'invention met de préférence en œuvre au moins un matériau adsorbant zéolithique présentant une perte au feu, mesurée à 950°C selon la norme NF EN 196-2, comprise entre 0 et 5%, de préférence entre 0 et 3% en poids.

En particulier, la présente invention concerne l'utilisation d'au moins un matériau adsorbant zéolithique tel qu'il vient d'être défini pour le séchage des gaz craqués. On définit le terme « gaz craqués » par les gaz obtenus par craquage (par exemple vapocraquage, craquage catalytique, déshydrogénation catalytique et autres) de charges d'hydrocarbures, à haute température (> 350°C), lesdites charges pouvant être par exemple, et à titre non limitatif, GPL, éthane, naphta, gazole, distillat sous vide, et autres. Les procédés TSA sont tout particulièrement adaptés pour ces utilisations de séchage de gaz craqués. On préfère en particulier utiliser pour ces types d'applications, les matériaux adsorbants comprenant au moins une zéolithe 3A, de préférence mésoporeuse.

Pour ces types d'applications, on préfère un matériau adsorbant zéolithique dont le diamètre moyen volumique (ou la plus grande longueur) est compris entre 0,5 mm et 7,0 mm, de préférence entre 1,0 mm et 7,0 mm, et de préférence encore entre 1,5 mm et 7,0 mm, bornes incluses.

Selon un autre mode de réalisation, la présente invention concerne l'utilisation d'au moins un matériau adsorbant zéolithique tel qu'il vient d'être défini pour le séchage et/ou la séparation de fluides frigorigènes, notamment de HFC et de HFO, tels que par exemple et de manière non limitative, le 1,1,1,2 tétrafluoroéthane, le 2,3,3,3-tétrafluoropropène, et autres, comme par exemple ceux cités dans le document WO2007/144632. Les procédés TSA sont tout particulièrement adaptés pour ces utilisations de séchage de fluides frigorigènes. On préfère en particulier utiliser pour ces types d'applications, les matériaux adsorbants comprenant au moins une zéolithe A, de préférence mésoporeuse, choisie parmi les zéolithes 3A, 4A, 5A, et leurs mélanges.

Pour ces types d'applications, on préfère un matériau adsorbant zéolithique dont le diamètre moyen volumique (ou la plus grande longueur) est compris entre 0,3 mm et 7,0 mm, de préférence entre 0,8 mm et 5,0 mm, et de préférence encore entre 1,0 mm et 4,0 mm, bornes incluses.

Selon un autre mode de réalisation, la présente invention concerne l'utilisation d'au moins un matériau adsorbant zéolithique tel qu'il vient d'être défini pour le séchage d'alcools, et en particulier de l'éthanol, et notamment selon des procédés modulés en pression (PSA). On préfère en particulier utiliser pour ces types d'applications, les matériaux adsorbants comprenant au moins une zéolithe 3A, de préférence mésoporeuse.

Pour ces types d'applications, on préfère un matériau adsorbant zéolithique dont le diamètre moyen volumique (ou la plus grande longueur) est compris entre 0,3 mm et 7,0 mm, de préférence entre 0,8 mm et 5,0 mm, et de préférence encore entre 2,0 mm et 5,0 mm, bornes incluses.

Selon un autre mode de réalisation, la présente invention concerne l'utilisation d'au moins un matériau adsorbant zéolithique tel qu'il vient d'être défini pour le séchage et/ou la séparation de l'air et des gaz industriels. Les procédés TSA sont tout particulièrement adaptés pour ces utilisations de séchage de l'air et des gaz industriels. On préfère en particulier utiliser pour ces types d'applications, les matériaux adsorbants comprenant au moins une zéolithe A, de préférence mésoporeuse, choisie parmi les zéolithes 3A, 4A, 5A, et leurs mélanges.

Une application tout particulièrement intéressante est la séparation de l'azote et de l'oxygène de l'air, selon un procédé PSA ou VPSA, en utilisant un matériau adsorbant zéolithique tel que défini précédemment, et comportant au moins une zéolithe 5A, de préférence mésoporeuse.

Pour ces types d'applications, on préfère un matériau adsorbant zéolithique dont le diamètre moyen volumique (ou la plus grande longueur) est compris entre 0,3 mm et 7,0 mm, de préférence entre 0,8 mm et 5,0 mm, et de préférence encore entre 1,0 mm et 5,0 mm, bornes incluses.

Selon un autre mode de réalisation, la présente invention concerne l'utilisation d'au moins un matériau adsorbant zéolithique tel qu'il vient d'être défini pour la purification des oléfines, en particulier pour l'élimination des impuretés, et de préférence pour l'élimination des impuretés oxygénées, et de préférence encore pour l'élimination du méthanol, notamment selon des procédés d'adsorption TSA. On préfère en particulier utiliser pour ces types d'applications, les matériaux adsorbants comprenant au moins une zéolithe A, de préférence mésoporeuse, choisie parmi les zéolithes 3A, 4A, 5A et leurs mélanges, de préférence parmi les zéolithes 3A, 4A, et leurs mélanges.

Pour ces types d'applications, on préfère un matériau adsorbant zéolithique dont le diamètre moyen volumique (ou la plus grande longueur) est compris entre 0,3 mm et 7,0 mm, de préférence entre 0,8 mm et 5,0 mm, et de préférence encore entre 2,0 mm et 4,0 mm, bornes incluses.

Selon un autre mode de réalisation, la présente invention concerne l'utilisation d'au moins un matériau adsorbant zéolithique tel qu'il vient d'être défini pour le séchage et/ou la séparation du gaz naturel, en particulier pour l'élimination des impuretés et de préférence pour l'élimination du dioxyde de carbone, sulfure d'hydrogènes, et/ou mercaptans légers (à un ou deux atomes de carbone : $C_1SH$, $C_2SH$), notamment selon des procédés d'adsorption TSA, PSA ou PTSA. On préfère en particulier utiliser pour ces types d'applications, les matériaux adsorbants comprenant au moins une zéolithe A, de préférence mésoporeuse, choisie parmi les zéolithes 3A, 4A et 5A, et leurs mélanges.

Pour ces types d'applications, on préfère un matériau adsorbant zéolithique dont le diamètre moyen volumique (ou la plus grande longueur) est compris entre 0,3 mm et 7,0 mm, de préférence entre 0,8 mm et 5,0 mm, et de préférence encore entre 2,0 mm et 5,0 mm, bornes incluses.

Selon un autre mode de réalisation, la présente invention concerne l'utilisation d'au moins un matériau adsorbant zéolithique tel qu'il vient d'être défini pour la séparation des paraffines, de préférence en phase gaz, notamment selon des procédés d'adsorption TSA. On préfère en particulier utiliser pour ces types d'applications, les matériaux adsorbants comprenant au moins une zéolithe 5A, de préférence mésoporeuse.

Pour ces types d'applications, on préfère un matériau adsorbant zéolithique dont le diamètre moyen volumique (ou la plus grande longueur) est compris entre 0,3 mm et 7,0 mm, de préférence entre 0,8 mm et 5,0 mm, et de préférence encore entre 2,0 mm et 5,0 mm, bornes incluses.

Selon un autre mode de réalisation, l'invention concerne l'utilisation d'au moins un matériau adsorbant zéolithique tel qu'il vient d'être défini pour le séchage et/ou la purification de gaz de synthèse. Un exemple de procédé de purification de gaz de synthèse est décrit dans le brevet EP1312406. Les gaz de synthèse visés ici sont en particulier des gaz de synthèse à base d'hydrogène et de monoxyde de carbone et/ou d'hydrogène et d'azote (gaz de synthèse pour la production d'hydrogène), et plus particulièrement des mélanges d'hydrogène et de monoxyde de carbone et/ou d'hydrogène et d'azote, ces gaz de synthèse pouvant en outre contenir, ou être pollués par, du dioxyde de carbone et une ou plusieurs éventuelles autres impuretés, telles que par exemple et à titre non limitatif une ou plusieurs impuretés choisies parmi azote, monoxyde de carbone, oxygène, ammoniac, hydrocarbures et dérivés oxygénés, en particulier alcanes, notamment méthane, alcools, notamment méthanol, et autres.

L'utilisation selon la présente invention est ainsi tout particulièrement adaptée à l'élimination de l'azote, du monoxyde de carbone, du dioxyde de carbone, du méthane, et autres impuretés, de préférence par des procédés d'adsorption modulés en pression (PSA), pour la production d'hydrogène. Pour ces types d'applications, on préfère les matériaux adsorbants comprenant au moins une zéolithe A, de préférence mésoporeuse, choisie parmi les zéolithes 3A, 4A et 5A, et leurs mélanges.

Pour ces types d'applications, on préfère un matériau adsorbant zéolithique dont le diamètre moyen volumique (ou la plus grande longueur) est compris entre 0,3 mm et 7 mm, de préférence entre 0,8 mm et 5,0 mm, et de préférence encore entre 1,0 mm et 3,0 mm, bornes incluses.

Le matériau adsorbant zéolithique de l'invention tel qu'il vient d'être défini résulte de l'agglomération, avec un liant comme écrit plus loin, d'au moins une zéolithe A mésoporeuse, où le terme « mésoporeuse », déjà précédemment défini désigne une zéolithe qui présente, conjointement à la microporosité inhérente à la structure de la zéolithe, des cavités internes de taille nanométrique (mésoporosité), facilement identifiables par observation au moyen d'un microscope électronique à transmission (MET ou « TEM » en langue anglaise), comme décrit par exemple dans US7785563.

Plus précisément, le matériau adsorbant zéolithique comprend au moins une zéolithe A mésoporeuse, c'est-à-dire une zéolithe présentant une surface externe, définie par la méthode du t-plot décrite plus loin, comprise entre 40 $m^2.g^{-1}$ et 400 $m^2.g^{-1}$, de préférence entre 60 $m^2.g^{-1}$ et 200 $m^2.g^{-1}$, bornes incluses.

En outre le matériau adsorbant zéolithique selon l'invention comprend au moins un métal choisi parmi le potassium, le sodium, le calcium et les mélanges de deux ou plusieurs de ces métaux, de préférence deux métaux choisis parmi le potassium, le sodium et le calcium.

Ces caractéristiques rendent le matériau adsorbant zéolithique selon l'invention particulièrement adapté aux traitements des gaz, comme cela été décrit plus haut dans la présente description.

Le matériau adsorbant zéolithique selon l'invention peut se présenter sous toutes les formes connues de l'homme du métier, et de préférence sous formes géométriques simples, c'est-à-dire sous formes granulaires, par exemple de type billes ou bâtonnets, c'est-à-dire sous formes sphériques ou cylindriques, respectivement. De telles formes simples sont tout particulièrement bien adaptées car elles sont faciles à mettre en œuvre notamment en raison de leurs formes et de leurs tailles compatibles avec les technologies existantes. En outre, ces formes simples rendent les procédés mis en oeuvre peu énergivores, le matériau adsorbant zéolithique générant peu de pertes de charge, et présentant des propriétés de transfert améliorées.

Le matériau adsorbant zéolithique selon l'invention peut être préparé selon toute méthode connue de l'homme du métier, et en particulier, et de préférence, à partir du procédé de préparation de A mésoporeuse tel que décrit par exemple dans WO2007/043731 et en agglomérant les cristaux obtenus avec au moins un liant organique ou minéral, de préférence minéral, de préférence encore un liant choisi parmi les argiles, zéolithisables ou non, et en particulier parmi les kaolins, kaolinites, nacrites, dickites, halloysites, attapulgites, sépiolites, montmorillonites, bentonites, illites et métakaolins, ainsi que les mélanges de deux ou plusieurs de ces argiles, en toutes proportions.

L'agglomération et la mise en forme peuvent être réalisées selon toutes les techniques connues de l'homme du métier, telles qu'extrusion, compactage, agglomération sur assiette granulatrice, tambour granulateur, atomisation et autres. Ces différentes techniques présentent l'avantage de permettre la préparation de matériaux adsorbants selon l'invention possédant les tailles et formes précédemment décrites et tout particulièrement bien adaptées aux traitements des gaz.

Les proportions de liant d'agglomération (par exemple argiles, comme indiqué précédemment) et de zéolithe(s) mis en œuvre pour la préparation sont typiquement celles de l'art antérieur, et varient selon la teneur en PNZ souhaitée et le degré de zéolithisation du liant. Ces proportions sont aisément calculables par l'homme du métier spécialiste de la synthèse d'agglomérés zéolithiques.

Les agglomérés des matériaux adsorbants zéolithiques, qu'ils soient sous forme de billes, d'extrudés ou autres, ont en général un diamètre volumique moyen, ou une longueur moyenne (plus grande dimension lorsqu'ils ne sont pas sphériques), inférieur ou égal à 7 mm, de préférence compris entre 0,05 mm et 7 mm, de manière encore préférée compris entre 0,2 mm et 5 mm et plus préférentiellement entre 0,2 mm et 2,5 mm.

Le procédé de préparation des matériaux adsorbants zéolithiques selon l'invention est aisément adaptable à partir des procédés de préparation connus de l'homme du métier, comme déjà indiqué, la mise en œuvre d'au moins une zéolithe A mésoporeuse ne modifiant pas sensiblement ces procédés connus, ce qui fait que le procédé de préparation est un procédé de mise en œuvre aisée, rapide et économique et donc facilement industrialisable avec un minimum d'étapes.

Le matériau adsorbant zéolithique de l'invention comprend de préférence à la fois des macro-pores, des méso-pores et des micro-pores. Par « macro-pores », on entend des pores dont l'ouverture est supérieure à 50 nm, de préférence comprise entre 50 nm et 400 nm. Par « méso-pores », on entend des pores dont l'ouverture est comprise entre 2 nm et 50 nm, bornes non incluses. Par « micro-pores », on entend des pores dont l'ouverture est inférieure à 2 nm.

Selon un mode de réalisation préféré, le matériau adsorbant zéolithique selon la présente invention présente un volume microporeux (volume de Dubinin-Raduskevitch), exprimé en $cm^3$ par gramme de matériau adsorbant zéolithique, compris entre 0,160 $cm^3.g^{-1}$ et 0,280 $cm^3.g^{-1}$, de préférence entre 0,180 $cm^3.g^{-1}$ et 0,280 $cm^3.g^{-1}$, de préférence encore entre 0,200 $cm^3.g^{-1}$ et 0,280 $cm^3.g^{-1}$, avantageusement entre 0,220 $cm^3.g^{-1}$ et 0,280 $cm^3.g^{-1}$, ledit volume microporeux étant mesuré sur un matériau adsorbant zéolithique échangé à au moins 90% au calcium.

Le volume total des macro- et méso-pores des matériaux adsorbants zéolithiques selon l'invention, mesuré par intrusion de mercure, est avantageusement compris entre 0,15 $cm^3.g^{-1}$ et 0,50 $cm^3.g^{-1}$, de préférence compris entre 0,20 $cm^3.g^{-1}$ et 0,40 $cm^3.g^{-1}$ et de manière très préférée compris entre 0,20 $cm^3.g^{-1}$ et 0,35 $cm^3.g^{-1}$, les mesures étant réalisées sur le matériau adsorbant échangé à au moins 90% au calcium.

La fraction en volume des macropores du matériau adsorbant zéolithique est de préférence comprise entre 0,2 et 1,0 du volume total des macro- et méso-pores, de manière très préférée comprise entre 0,4 et 0,8, et de manière encore plus préférée entre 0,45 et 0,65 bornes incluses, les mesures étant réalisées sur le matériau adsorbant zéolithique échangé à au moins 90% au calcium.

La taille des cristaux de zéolithe de type A utilisées pour préparer le matériau adsorbant zéolithique de l'invention, ainsi que la taille des éléments de zéolithe de type A dans le matériau adsorbant zéolithique, sont mesurées par observation au microscope électronique à balayage (MEB). De manière préférée, le diamètre moyen des cristaux de zéolithe de type A est compris entre 0,1 $\mu$m et 20 $\mu$m de préférence entre 0,5 $\mu$m et 20 $\mu$m, et de préférence encore entre 0,5 $\mu$m et 10 $\mu$m. L'observation MEB permet également de confirmer la présence de phase non zéolithique comprenant par exemple du liant résiduel (non converti lors de l'éventuelle étape de zéolithisation) ou toute autre phase amorphe dans les agglomérés.

Selon un mode de réalisation préféré, la matériau adsorbant zéolithique selon l'invention présente une surface externe, mesurée par adsorption d'azote et exprimée en $m^2$ par gramme d'adsorbant, supérieure à 20 $m^2.g^{-1}$, et de préférence comprise entre 20 $m^2.g^{-1}$ et 300 $m^2.g^{-1}$, et de préférence encore comprise entre 30 $m^2.g^{-1}$ et 250 $m^2.g^{-1}$ et de manière encore préférée entre 40 $m^2.g^{-1}$ et 200 $m^2.g^{-1}$, et tout particulièrement entre 50 $m^2.g^{-1}$ et 200 $m^2.g^{-1}$ les mesures étant réalisées sur le matériau adsorbant zéolithique échangé à au moins 90% au calcium.

Selon un mode de réalisation préféré, la matériau adsorbant zéolithique selon l'invention présente une capacité volumique d'adsorption élevée, c'est-à-dire un volume microporeux volumique exprimé en $cm^3.cm^{-3}$ de matériau adsorbant zéolithique échangé à au moins 90% au calcium, ledit volume microporeux volumique étant supérieur à 0,01 $cm^3.cm^{-3}$, de préférence supérieur à 0,02 $cm^3.cm^{-3}$, de préférence encore supérieur à 0,03 $cm^3.cm^{-3}$, de manière encore préférée supérieur à 0,04 $cm^3.cm^{-3}$, de préférence encore supérieur à 0,05 $cm^3.cm^{-3}$.

Selon un mode de réalisation préféré, le matériau adsorbant zéolithique selon l'invention comprend au moins une zéolithe A mésoporeuse telle que définie précédemment, ladite au moins une zéolithe présentant un rapport Si/Al égal à 1,00 +/- 0,05, les mesures étant réalisées sur le matériau adsorbant zéolithique échangé à au moins 90% au calcium.

Selon encore un autre mode de réalisation préféré, ledit matériau adsorbant zéolithique comprend au moins un cation choisi parmi les ions des Groupes IA, IIA, IIIA, IB, IIB, IIIB de la classification périodique, les ions trivalents de la série des lanthanides ou terres-rares, l'ion zinc (II), l'ion argent (I), l'ion cuivrique (II), l'ion chromique (III), l'ion ferrique (III), l'ion ammonium et/ou l'ion hydronium, les ions préférés étant les ions calcium, lithium, sodium, potassium, baryum, césium, strontium, zinc et terres-rares et de préférence encore les ions sodium, calcium et potassium.

Selon encore un aspect préféré, le matériau adsorbant zéolithique selon l'invention ne présente pas de structure zéolithique autre que la structure A (LTA). L'expression « ne présente pas de structure zéolithique autre que la structure A », on entend qu'une analyse DRX (diffraction des rayons X) du matériau adsorbant selon l'invention ne permet pas de détecter plus de 5% en poids, de préférence pas plus de 2% en poids, bornes incluses, de structure zéolithique autre qu'une structure LTA, par rapport au poids total du matériau adsorbant zéolithique.

Selon encore un autre mode de réalisation préféré, le matériau selon la présente invention présente un volume total des macro- et méso-pores, mesuré par intrusion de mercure, compris entre 0,15 $cm^3.g^{-1}$ et 0,50$cm^3.g^{-1}$, et une fraction en volume des macropores comprise entre 0,2 et 1 fois ledit volume total des macro- et méso-pores, de préférence comprise entre 0,4 et 0,8, bornes incluses, les mesures étant réalisées sur le matériau adsorbant échangé à au moins 90% au calcium.

**Techniques de caractérisation**

Les propriétés physiques des matériaux adsorbants zéolithiques sont évaluées par les méthodes connues de l'homme du métier, dont les principales d'entre elles sont rappelées ci-dessous.

**Granulométrie des cristaux de zéolithes** :

L'estimation du diamètre moyen en nombre des cristaux de zéolithe de type A contenus dans les matériaux adsorbants zéolithiques, et qui sont utilisés pour la préparation dudit matériau adsorbant zéolithique, est réalisée par observation au microscope électronique à balayage (MEB).

Afin d'estimer la taille des cristaux de zéolithe sur les échantillons, on effectue un ensemble de clichés à un grossissement d'au moins 5000. On mesure ensuite le diamètre d'au moins 200 cristaux à l'aide d'un logiciel dédié, par exemple le logiciel Smile View de l'éditeur LoGraMi. La précision est de l'ordre de 3%.

**Granulométrie des adsorbants zéolithiques**

La détermination du diamètre volumique moyen (ou « diamètre moyen en volume ») du matériau adsorbant zéolithique du procédé selon l'invention est effectuée par analyse de la distribution granulométrique d'un échantillon de matériau adsorbant par imagerie selon la norme ISO 13322-2:2006, en utilisant un tapis roulant permettant à l'échantillon de passer devant l'objectif de la caméra.

Le diamètre moyen en volume est ensuite calculé à partir de la distribution granulométrique en appliquant la norme ISO 9276-2:2001. Dans le présent document, on emploie l'appellation « diamètre moyen en volume » ou bien « taille » pour les matériaux adsorbants zéolithiques. La précision est de l'ordre de 0,01 mm pour la gamme de taille des matériaux adsorbants utiles dans le cadre de la présente invention.

**Analyse chimique des matériaux adsorbants zéolithiques- ratio Si/Al et taux d'échange** :

Une analyse chimique élémentaire d'un matériau adsorbant zéolithique décrit précédemment, peut être réalisée selon différentes techniques analytiques connues de l'homme du métier. Parmi ces techniques, on peut citer la technique d'analyse chimique par fluorescence de rayons X telle que décrite dans la norme NF EN ISO 12677 : 2011 sur un spectromètre dispersif en longueur d'onde (WDXRF), par exemple Tiger S8 de la société Bruker.

La fluorescence X est une technique spectrale non destructive exploitant la photoluminescence des atomes dans le domaine des rayons X, pour établir la composition élémentaire d'un échantillon. L'excitation des atomes généralement par un faisceau de rayons X ou par bombardement avec des électrons, génère des radiations spécifiques après retour à l'état fondamental de l'atome. On obtient de manière classique après étalonnage pour chaque oxyde une incertitude de mesure inférieure à 0,4% en poids.

D'autres méthodes d'analyse sont par exemple illustrées par les méthodes par spectrométrie d'absorption atomique (AAS) et spectrométrie d'émission atomique avec plasma induit par haute fréquence (ICP-AES) décrites dans les normes NF EN ISO 21587-3 ou NF EN ISO 21079-3 sur un appareil de type par exemple Perkin Elmer 4300DV.

Le spectre de fluorescence X a l'avantage de dépendre très peu de la combinaison chimique de l'élément, ce qui offre une détermination précise, à la fois quantitative et qualitative. On obtient de manière classique après étalonnage pour chaque oxyde $SiO_2$ et $Al_2O_3$, ainsi que les différents oxydes (tels que ceux provenant des cations échangeables, par exemple calcium), une incertitude de mesure inférieure à 0,4% en poids.

Ainsi, les analyses chimiques élémentaires décrites ci-dessus permettent à la fois de vérifier le ratio Si/Al de la zéolithe utilisée au sein du matériau adsorbant zéolithique et le ratio Si/Al du matériau adsorbant zéolithique. Dans la description de la présente invention, l'incertitude de mesure du ratio Si/Al est de $\pm$ 5%. La mesure du ratio Si/Al de la zéolithe présente dans le matériau adsorbant peut également être mesurée par spectroscopie de Résonance Magnétique Nucléaire (RMN) solide du silicium.

La qualité de l'échange ionique est liée au nombre de moles du cation considéré dans le matériau adsorbant zéolithique après échange. Plus précisément, le taux d'échange par un cation donné est estimé en évaluant le rapport entre le nombre de moles dudit cation et le nombre de moles de l'ensemble des cations échangeables. Les quantités respectives de chacun des cations sont évaluées par analyse chimique des cations correspondants. Par exemple, le taux d'échange par les ions calcium est estimé en évaluant le rapport entre le nombre total de cation $Ca^{2+}$ et le nombre total de cations échangeables (par exemple $Ca^{2+}$, $K^+$, $Li^+$, $Ba^{2+}$, $Cs^+$, $Na^+$, etc..), la quantité de chacun des cations étant évaluée par analyse chimique des oxydes correspondants ($Na_2O$, CaO, $K_2O$, BaO, $Li_2O$, $Cs_2O$, etc.). Cette méthode de calcul comptabilise également les éventuels oxydes présents dans le liant résiduel du matériau adsorbant zéolithique. Toutefois, la quantité de tels oxydes est considérée comme mineure par rapport aux oxydes provenant des cations des sites échangeables de la ou des zéolithes du matériau adsorbant zéolithique selon l'invention.

**Volume macroporeux et mésoporeux**

Les volumes macroporeux et mésoporeux sont mesurés par porosimétrie par intrusion de mercure. Un porosimètre à mercure type Autopore® 9500 de Micromeritics est utilisé pour analyser la répartition du volume poreux contenu dans les macropores et dans les mésopores.

La méthode expérimentale, décrite dans le manuel opératoire de l'appareil faisant référence à la norme ASTM D4284-83, consiste à placer un échantillon de matériau adsorbant zéolithique à mesurer (de perte au feu connue) préalablement pesé, dans une cellule du porosimètre, puis, après un dégazage préalable (pression d'évacuation de 30 $\mu$m Hg pendant au moins 10 min), à remplir la cellule avec du mercure à une pression donnée (0,0036 MPa), et ensuite à appliquer une pression croissante par palier jusqu'à 400 MPa afin de faire pénétrer progressivement le mercure dans le réseau poreux de l'échantillon.

Dans le présent document, les volumes macroporeux et mésoporeux des matériaux adsorbants zéolithiques, exprimés en $cm^3.g^{-1}$, sont ainsi mesurés par intrusion de mercure et rapportés à la masse de l'échantillon en équivalent anhydre, c'est-à-dire la masse dudit matériau corrigée de la perte au feu. Les mesures sont réalisées sur le matériau adsorbant zéolithique échangé à au moins 90% au calcium.

**Résistance mécanique des matériaux adsorbants zéolithiques :**

La résistance à l'écrasement en lit des matériaux adsorbants zéolithiques tels que décrits dans la présent invention est caractérisée selon la norme ASTM 7084-04. Les résistances mécaniques à l'écrasement en grains sont déterminées avec un appareil « Grain Crushing strength » commercialisé par Vinci Technologies, selon les normes ASTM D 4179 et D 6175.

**Mesure du Volume microporeux :**

La mesure du volume microporeux est estimée par des méthodes classiques telles que les mesures des volumes de Dubinin-Raduskevitch (adsorption d'azote liquide à 77 K ou d'argon liquide à 87 K).

Le volume de Dubinin-Raduskevitch est déterminé à partir de la mesure de l'isotherme d'adsorption de gaz, tel que l'azote ou l'argon, à sa température de liquéfaction, en fonction de l'ouverture de pores de la zéolithe : on choisira l'azote pour la zéolithe A, préalablement échangée à au moins 90% au calcium. Préalablement à l'adsorption, le matériau adsorbant zéolithique est dégazé entre 300°C et 450°C pendant une durée comprise entre 9 heures et 16 heures, sous vide ($P < 6{,}7.10^{-4}$ Pa). La mesure des isothermes d'adsorption est ensuite effectuée sur un appareil de type ASAP 2020 de Micromeritics, en prenant au moins 35 points de mesure à des pressions relatives de rapport P/P0 compris entre 0,002 et 1. Le volume microporeux est déterminé selon Dubinin et Raduskevitch à partir de l'isotherme obtenu, en appliquant la norme ISO 15901-3 (2007). Le volume microporeux évalué selon l'équation de Dubinin et Raduskevitch s'exprime en $cm^3$ d'adsorbat liquide par gramme de matériau adsorbant zéolithique. L'incertitude de mesure est de $\pm$ 0,003 $cm^3.g^{-1}$, les mesures étant réalisées sur le matériau adsorbant zéolithique échangé à au moins 90% au calcium.

**Mesure du volume microporeux volumique :**

Le volume microporeux volumique se calcule à partir du volume microporeux tel que défini ci-dessus et en multipliant ledit volume microporeux par la masse volumique apparente dudit matériau adsorbant zéolithique. La masse volumique apparente est mesurée comme décrit dans la norme DIN 8948/7.6.

**Perte au feu des matériaux adsorbants zéolithiques :**

La perte au feu est déterminée en atmosphère oxydante, par calcination de l'échantillon à l'air à une température de 950°C $\pm$ 25°C, comme décrit dans la norme NF EN 196-2 (avril 2006). L'écart-type de mesure est inférieur à 0,1%.

**Analyse qualitative et quantitative par diffraction des rayons X**

La pureté des zéolithes dans les matériaux adsorbants zéolithiques est évaluée par analyse de diffraction aux rayons X, connue de l'homme du métier sous l'acronyme DRX. Cette identification est réalisée sur un appareil DRX de la marque Bruker.

Cette analyse permet d'identifier les différentes zéolithes présentes dans le matériau adsorbant car chacune des zéolithes possède un diffractogramme unique défini par le positionnement des pics de diffraction et par leurs intensités relatives.

Les matériaux adsorbants zéolithiques sont broyés puis étalés et lissés sur un porte échantillon par simple compression mécanique.

Les conditions d'acquisition du diffractogramme réalisé sur l'appareil D5000 Brucker sont les suivantes :

- tube Cu utilisé à 40 kV - 30 mA ;
- taille des fentes (divergentes, de diffusion et d'analyse) = 0,6 mm ;
- filtre : Ni ;
- dispositif d'échantillon tournant : 15 $tr.min^{-1}$ ;
- plage de mesure : 3° < $2\theta$ < 50° ;
- pas : 0,02° ;
- temps de comptage par pas : 2 secondes.

L'interprétation du diffractogramme obtenu s'effectue avec le logiciel EVA avec identification des zéolithes à l'aide de la base ICDD PDF-2, release 2011.

La quantité des fractions zéolithiques LTA, en poids, est mesurée par analyse par DRX, cette méthode est également utilisée pour mesurer la quantité des fractions zéolithiques autres que LTA. Cette analyse est réalisée sur un appareil de la marque Bruker, puis la quantité en poids des fractions zéolithiques est évaluée au moyen du logiciel TOPAS de la société Bruker.

**Mesure de la surface externe ($m^2/g$) par la méthode dite du t-plot :**

La méthode de calcul dite du t-plot exploite les données de l'isotherme d'adsorption Q ads = f (P/P0) et permet de calculer la surface microporeuse. On peut en déduire la surface externe en faisant la différence avec la surface BET qui calcule la surface poreuse totale en $m^2/g$ (S BET = Surface microporeuse + Surface externe).

Pour calculer la surface microporeuse par la méthode t-plot, on trace la courbe Q ads ($cm^3.g^{-1}$) en fonction de t = épaisseur de la couche dépendant de la pression partielle P/P0 qui se formerait sur un matériau non poreux de référence (t fonction de log (P/P0) : équation de Harkins et Jura appliquée : [13,99/(0,034-log(P/P0))^0,5]. Dans l'intervalle t compris entre 0,35 nm et 0,5 nm, on peut tracer une droite qui définit une ordonnée à l'origine Q adsorbée qui permet de calculer la surface microporeuse. Si le matériau n'est pas microporeux la droite passe par 0, les mesures étant réalisées sur le matériau adsorbant zéolithique échangé à au moins 90% au calcium.

**Mesure du Volume mésoporeux :**

La mesure du volume mésoporeux est estimée par des méthodes classiques telles que les mesures des volumes de Barret-Joyner-Halenda (adsorption d'azote liquide à 77 K).

Le volume mésoporeux est déterminé à partir de la mesure de l'isotherme d'adsorption de gaz, tel que l'azote, à sa température de liquéfaction, en fonction de l'ouverture de pores de la zéolithe : on choisira l'azote pour la zéolithe A, préalablement échangée à au moins 90% au calcium. Préalablement à l'adsorption, le matériau adsorbant zéolithique est dégazé entre 300°C et 450°C pendant une durée comprise entre 9 heures et 16 heures, sous vide (P < $6,7.10^{-4}$ Pa). La mesure des isothermes d'adsorption est ensuite effectuée sur un appareil de type ASAP 2020 de Micromeritics, en prenant au moins 35 points de mesure à des pressions relatives de rapport P/P0 compris entre 0,002 et 1. Le volume mésoporeux est déterminé selon Barret-Joyner-Halenda à partir de l'isotherme obtenu, en appliquant la norme ISO 15901-2 (2007). Le volume mésoporeux évalué selon l'équation de Barret-Joyner-Halenda s'exprime en $cm^3$ d'adsorbat liquide par gramme de matériau adsorbant zéolithique, les mesures étant réalisées sur le matériau adsorbant zéolithique échangé à au moins 90% au calcium.

Les exemples suivants servent à illustrer l'invention et n'ont pas pour but d'en limiter la portée telle que définie par les revendications annexées.

**Exemple 1 : Préparation d'un matériau adsorbant zéolithique selon l'invention**

**Étape 1 : Synthèse de zéolite A mésoporeuse avec ajout de gel de nucléation et de**

**gel de croissance.**

*a) Préparation du gel de croissance*

Dans réacteur en verre de 1,5 litres agité avec une hélice à 3 pâles à 600 $tr.min^{-1}$ muni d'une double enveloppe chauffante et d'une sonde de température; on prépare un gel de croissance en mélangeant une solution d'aluminate contenant 151 g d'hydroxyde de sodium (NaOH), 112,4 g d'alumine trihydratée ($Al_2O_3$•$3H_2O$, contenant 65,2% en poids d'$Al_2O_3$) et 212 g eau à 35°C en 5 minutes avec une vitesse d'agitation de 600 $tr.min^{-1}$ avec une solution de silicate contenant 321,4 g de silicate de sodium et 325 g d'eau à 35°C.

La stoechiométrie du gel de croissance est la suivante : 3,13 $Na_2O$ / $Al_2O_3$ / 1,92 $SiO_2$ / 68 $H_2O$. L'homogénéisation du gel de croissance est réalisée sous agitation à 600 $tr.min^{-1}$, pendant 15 minutes, à 35°C.

*b) Ajout du gel de nucléation*

On ajoute au gel de croissance, à 35°C sous agitation à 300 $tr.min^{-1}$, 11,2 g de gel de nucléation (soit 1 % en poids) de composition 2,05 $Na_2O$/ $Al_2O_3$ / 1,92 $SiO_2$ / 87 $H_2O$ préparé de la même manière que le gel de croissance, et ayant mûri pendant 2 heures à 25°C. Après 5 minutes d'homogénéisation à 300 $tr.min^{-1}$, la vitesse d'agitation est diminuée à 190 $tr.min^{-1}$ et poursuivie pendant 30 minutes.

*c) Introduction dans le milieu réactionnel de l'agent structurant*

On introduit dans le milieu réactionnel 35,7 g de solution de chlorure de [3-(triméthoxysilyl)propyl]octadecyldiméthylammonium (TPOAC) à 60% dans le méthanol (MeOH) avec une vitesse d'agitation de 600 $tr.min^{-1}$ (ratio molaire $TPOAC/Al_2O_3$ = 0,04). On opère à 35°C une étape de maturation pendant 10 minutes à 300 $tr.min^{-1}$ avant de démarrer la cristallisation.

*d) Cristallisation*

On abaisse la vitesse d'agitation à 190 $tr.min^{-1}$ et on fixe la consigne de la double enveloppe du réacteur à 105°C afin que le milieu réactionnel monte en température à 97°C en 40 minutes. Après 3 heures de palier à 97°C, on refroidit le milieu réactionnel en faisant circuler de l'eau froide dans la double enveloppe pour stopper la cristallisation.

*e) Filtration / lavage*

Les solides sont récupérés sur fritté puis lavés avec de l'eau permutée jusqu'à pH neutre.

*f) Séchage*

Le séchage est réalisé en étuve à 90°C pendant 8 heures pour obtenir un solide avec une perte au feu de 20 %.

**Étape 2 :** Echange calcium pour obtenir une poudre de zéolithe CaA mésoporeuse

*a) Échanges calcium*

On effectue un échange calcium pour obtenir un diamètre des micropores d'environ 0,5 nm : Les conditions d'échange sont les suivantes : 50 g de poudre séchée sont mis en contact avec 500 $cm^3$ de solution $CaCl_2$ 0,5 M à 70°C pendant 2 heures puis on filtre et on lave avec 280 $cm^3$ d'eau. L'opération est répétée 3 fois (triple échange). On obtient un taux d'échange calcium de 92 %.

*b) Séchage*

Le séchage est réalisé en étuve à 90°C pendant 8 heures pour obtenir un solide avec une perte au feu de 20 %.

*c) Calcination*

La calcination du produit séché nécessaire pour libérer à la fois la microporosité (eau) et la mésoporosité en éliminant l'agent structurant est effectuée par un dégazage sous vide avec une montée progressive par pas de 50°C jusqu'à 400°C pendant une durée comprise entre 9 heures et 16 heures, sous vide ($P < 6{,}7.10^{-4}$ Pa).

Le volume microporeux et la surface externe mesurés selon la méthode du t-plot à partir de l'isotherme d'adsorption d'azote à 77K après dégazage sous vide à 400°C pendant 10 heures sont respectivement 0,208 $cm^3.g^{-1}$ et 92 $m^2.g^{-1}$. Le diamètre moyen en nombre des cristaux est de 0,8 $\mu$m. Les diamètres des mésopores calculés à partir de l'isotherme d'adsorption d'azote par la méthode DFT sont compris entre 5 nm à 10 nm. Le diffractogramme RX correspond à une structure LTA pure, aucune autres phases zéolithiques n'est détectée. Le rapport molaire Si/Al de la zéolithe CaA mésoporeuse déterminé par fluorescence X est égal à 1,02.

**Étape 3 : Préparation d'agglomérés de zéolithe Ca A mésoporeuse**

Dans ce qui suit les masses données sont exprimées en équivalent anhydre.

On prépare un mélange homogène constitué de 1700 g de cristaux de zéolithe CaA mésoporeuse obtenue à l'étape 2, de 300 g d'attapulgite Zeoclay®, commercialisée par CECA, ainsi que de la quantité d'eau telle que la perte au feu de la pâte avant mise en forme est de 35%. On utilise la pâte ainsi préparée sur une assiette granulatrice afin de réaliser des billes de matériau adsorbant zéolithique aggloméré. Une sélection par tamisage des billes obtenues est réalisée de façon à recueillir des billes de diamètre compris entre 0,3 et 0,8 mm et de diamètre moyen en volume égal à 0,55 mm.

Les billes sont séchées une nuit en étuve ventilée à 80°C. Elles sont ensuite calcinées pendant 2 h à 550°C sous balayage à l'azote, puis 2 h à 550°C sous balayage à l'air sec décarbonaté.

**Étape 4 : Caractérisations**

La surface externe des billes de CaA mésoporeuse est égale à 92 $m^2.g^{-1}$ d'adsorbant, le volume microporeux est de 0,202 $cm^3.g^{-1}$ d'adsorbant. Le volume microporeux volumique est de 0,131 $cm^3$ par $cm^3$ de matériau adsorbant zéolithique. Le volume mésoporeux est égal à 0,140 $cm^3.g^{-1}$ d'adsorbant échangé au sodium. Le volume total des macro- et méso-pores, mesuré par intrusion mercure, est de 0,41 $cm^3.g^{-1}$ d'adsorbant.

Le ratio atomique Si/Al de l'adsorbant est de 1,25. On détermine par RMN solide du silicium 29 le ratio Si/Al de la zéolithe présente dans le matériau zéolithique adsorbant, qui est égal à 1,01.

La teneur en phase non zéolithique (PNZ), mesurée par DRX et exprimée en poids par rapport au poids total de l'adsorbant, est de 15,0%.

**Exemple 2 : Matériau adsorbant zéolithique comparatif**

Le tamis Siliporite® NK20 de CECA est un matériau à base de zéolithe CaA agglomérée à l'attapulgite. Le diamètre volumique moyen des billes est égal à 0,55 mm. La teneur en oxyde de calcium CaO, mesurée par ICP-AES, est de 15,7 % en poids par rapport au poids total de tamis soit un taux d'échange Ca ramené à la poudre de 92 %.

La surface externe est égale à 39 $m^2.g^{-1}$ d'adsorbant, le volume microporeux est de 0,238 $cm^3.g^{-1}$ d'adsorbant. Le volume microporeux volumique est de 0,167 $cm^3$ par $cm^3$ de matériau adsorbant zéolithique. Le volume mésoporeux est égal à 0,07 $cm^3.g^{-1}$ d'adsorbant. Le volume total des macro- et méso-pores, mesuré par intrusion mercure, est de 0,30 $cm^3.g^{-1}$ d'adsorbant échangé au sodium.

Le ratio atomique Si/Al de l'adsorbant est de 1,23. La teneur en phase non zéolithique (PNZ), mesurée par DRX et exprimée en poids par rapport au poids total de l'adsorbant, est de 15,5%.

**Exemple 3 :**

***Tests de séparation $N_2$ / $O_2$ sur un lit fixe d'adsorbant avec modulation de***

***l'adsorption en pression.***

Un test de séparation $N_2$ / $O_2$ est réalisé par adsorption dans une colonne unique selon un principe présenté dans E. Alpay et coll. (*ibid*.).

La **Figure 1** décrit le montage réalisé. Une colonne (1) de diamètre intérieur égal à 27,5 mm et de hauteur intérieure égale à 600 mm, remplie de matériau adsorbant zéolithique (2), est alimentée en air sec (3) par intermittence au moyen d'une vanne (4). Le temps d'alimentation de la colonne (1) par le flux (3) est appelé temps d'adsorption. Quand la colonne (1) n'est pas alimentée en air sec, le flux (3) est évacué à l'atmosphère par la vanne (5). Le matériau adsorbant zéolithique adsorbe préférentiellement l'azote, si bien qu'un air enrichi en oxygène sort de la colonne par le clapet anti-retour (6), vers une capacité tampon (7). Une vanne régulatrice (8) délivre en continu le gaz en sortie (9) à un débit constant fixé à 1 NL $min^{-1}$. Quand la colonne (1) n'est pas alimentée, c'est-à-dire quand la vanne (4) est fermée et la vanne (5) est ouverte, la colonne (1) est dépressurisée par la vanne (10) à l'atmosphère (11), pendant une durée appelée temps de désorption. Les phases d'adsorption et de désorption se succèdent les unes aux autres. Les durées de ces phases sont fixes d'un cycle à l'autre et elles sont réglables. Le Tableau 1 indique l'état respectif des vannes en fonction des phases d'adsorption et de désorption.

**Tableau 1**

| Phase d'adsorption | Phase de désorption |
|---|---|
| Vanne (4) ouverte<br>Vanne (5) fermée<br>Vanne (10) fermée | Vanne (4) fermée<br>Vanne (5) ouverte<br>Vanne (10) ouverte |

Les tests sont réalisés successivement avec les matériaux adsorbants zéolithiques de l'exemple 1 (selon l'invention) et de l'exemple 2 (comparatif). La colonne est chargée à volume constant, avec respectivement 241,2 g et 259,2 g de matériaux adsorbants.

La pression à l'entrée est fixée à 280 kPa relatifs. Le débit en sortie est fixé à 1 $NL.min^{-1}$. Le temps d'adsorption est fixé à 0,25 s. Le temps de désorption est variable entre 0,25 s et 1,50 s. La concentration en oxygène en sortie (9) est mesurée au moyen d'un analyseur d'oxygène Servomex 570A.

La **Figure 2** montre la teneur en oxygène du flux produit en sortie (9) en fonction du temps de désorption fixé pour les matériaux de l'exemple 1 et de l'exemple 2. En dépit d'une masse moindre chargée dans la colonne, le matériau de l'exemple 1 (selon l'invention) s'avère beaucoup plus efficace que le solide de l'exemple 2 (comparatif).

## Revendications

**1.** Utilisation, pour la séparation et/ou le séchage de gaz, d'au moins un matériau adsorbant zéolithique sous forme d'agglomérés issus d'une agglomération avec au moins un liant organique ou minéral, comprenant au moins une zéolithe de type A mésoporeuse présentant un ratio Si/Al, mesuré par Résonance Magnétique Nucléaire (RMN) solide du silicium 29, égal à 1,00 +/- 0,05, et une surface externe, mesurée par adsorption d'azote, comprise entre 40 $m^2.g^{-1}$ et 400 $m^2.g^{-1}$, de préférence entre 60 $m^2.g^{-1}$ et 200 $m^2.g^{-1}$, bornes incluses, la surface externe étant la différence entre la surface BET et la surface microporeuse, la surface microporeuse étant calculée par la méthode du t-plot, ledit adsorbant présentant :

- une surface externe, mesurée par adsorption d'azote et exprimée en $m^2$ par gramme d'adsorbant, entre 40 $m^2.g^{-1}$ et 200 $m^2.g^{-1}$, et tout particulièrement entre 50 $m^2.g^{-1}$ et 200 $m^2.g^{-1}$, la surface externe étant la différence entre la surface BET et la surface microporeuse, la surface microporeuse étant calculée par la méthode du t-plot,
- une teneur en phase non zéolithique (PNZ), telle que 0 < PNZ ≤ 30%, de préférence 3% s PNZ ≤ 25%, de préférence encore 3% s PNZ ≤ 20%, avantageusement 5% ≤ PNZ ≤ 20%, mieux encore 7% ≤ PNZ ≤ 18%, mesurée par DRX (Diffraction par Rayons X), en poids par rapport au poids total de l'adsorbant,
- un volume mésoporeux, déterminé par la méthode Barrett-Joyner-Halenda (BJH) en appliquant la norme ISO 15901-2 (2007), compris entre 0,07 $cm^3.g^{-1}$ à 0,18 $cm^3.g^{-1}$, de préférence entre 0,10 $cm^3.g^{-1}$ et 0,18 $cm^3.g^{-1}$, et de préférence encore entre 0,12 $cm^3.g^{-1}$ et 0,18 $cm^3.g^{-1}$, de préférence encore entre 0,14 $cm^3.g^{-1}$ et 0,18 $cm^3.g^{-1}$, bornes incluses,
- un rapport (Vmicro - Vméso)/Vmicro compris entre -0,3 et 1,0, bornes non incluses, de préférence entre -0,1 et 0,9, bornes non incluses, de préférence entre 0 et 0,9, bornes non incluses, de préférence encore entre 0,2 et 0,8, bornes non incluses, de préférence encore entre 0,4 et 0,8, bornes non incluses, de manière préférée entre 0,6 et 0,8, bornes non incluses, où Vmicro est le volume microporeux mesuré par la méthode de Dubinin-Raduskevitch et Vméso est le volume mésoporeux déterminé par la méthode Barrett-Joyner-Halenda (BJH),
- et de ratio atomique Si/Al de l'adsorbant, mesuré par fluorescence de rayons X selon la norme NF EN ISO 12677 (2011), compris entre 1,0 et 2,0, de préférence entre 1,0 et 1,6, et de manière tout à fait préférée, entre 1,0 et 1,4,

l'ensemble des mesures étant effectuées sur le matériau adsorbant échangé à au moins 90% au calcium.

**2.** Utilisation selon la revendication 1, dans laquelle ledit au moins un matériau adsorbant zéolithique présente un volume microporeux, représenté par le volume de Dubinin-Raduskevitch, exprimé en $cm^3$ par gramme de matériau adsorbant zéolithique, compris entre 0,160 $cm^3.g^{-1}$ et 0,280 $cm^3.g^{-1}$, de préférence entre 0,180 $cm^3.g^{-1}$ et 0,280 $cm^3.g^{-1}$, de préférence entre 0,200 $cm^3.g^{-1}$ et 0,280 $cm^3.g^{-1}$, de préférence encore 0,220 $cm^3.g^{-1}$ et 0,280 $cm^3.g^{-1}$, mesuré sur le matériau adsorbant échangé à au moins 90% au calcium.

**3.** Utilisation selon l'une quelconque des revendications 1 ou 2, ledit matériau adsorbant zéolithique comprenant au moins un cation choisi parmi les ions des Groupes IA, IIA, IIIA, IB, IIB, IIIB de la classification périodique, les ions trivalents de la série des lanthanides ou terres-rares, l'ion zinc (II), l'ion argent (I), l'ion cuivrique (II), l'ion chromique (III), l'ion ferrique (III), l'ion ammonium et/ou l'ion hydronium, les ions préférés étant les ions calcium, lithium, sodium, potassium, baryum, césium, strontium, zinc et terres-rares et de préférence encore les ions sodium, calcium et potassium, et leurs mélanges.

**4.** Utilisation selon l'une quelconque des revendications 1 à 3, pour le séchage des gaz craqués.

**5.** Utilisation selon la revendication 4, dans laquelle le matériau adsorbant zéolithique comprend au moins zéolithe 3A mésoporeuse.

**6.** Utilisation selon l'une quelconque des revendications 1 à 3 pour le séchage et/ou la séparation de fluides frigorigènes, de préférence les HFC et les HFO, et de préférence le séchage du 1,1,1,2 tétrafluoroéthane et du 2,3,3,3-tétrafluoropropène.

**7.** Utilisation selon la revendication 6, dans laquelle le matériau adsorbant zéolithique comprend au moins une zéolithe A mésoporeuse, choisie parmi les zéolithes 3A, 4A, 5A, et leurs mélanges.

**8.** Utilisation selon l'une quelconque des revendications 1 à 3, pour le séchage et/ou la séparation de l'air et des gaz industriels.

**9.** Utilisation selon la revendication 8, dans laquelle le matériau adsorbant zéolithique comprend au moins une zéolithe A mésoporeuse, choisie parmi les zéolithes 3A, 4A, 5A, et leurs mélanges.

**10.** Utilisation selon l'une quelconque des revendications 1 à 3, pour la purification d'oléfines, en particulier pour l'élimination des impuretés, de préférence pour l'élimination des impuretés oxygénées, et de préférence encore pour l'élimination du méthanol.

**11.** Utilisation selon la revendication 10, dans laquelle le matériau adsorbant zéolithique comprenant au moins une zéolithe A mésoporeuse, choisie parmi les zéolithes 3A, 4A, 5A, et leurs mélanges, de préférence parmi les zéolithes 3A, 4A, et leurs mélanges.

**12.** Utilisation selon l'une quelconque des revendications 1 à 3, pour la séparation des paraffines.

**13.** Utilisation selon la revendication 12, dans laquelle le matériau adsorbant zéolithique comprend au moins une zéolithe 5A mésoporeuse.

**14.** Utilisation selon l'une quelconque des revendications 1 à 3, pour le séchage et/ou la purification des gaz de synthèse, en particulier pour la production d'hydrogène.

**15.** Utilisation selon la revendication 14, dans laquelle le matériau adsorbant zéolithique comprenant au moins une zéolithe A mésoporeuse, choisie parmi les zéolithes 3A, 4A, 5A, et leurs mélanges.

## Patentansprüche

**1.** Verwendung mindestens eines zeolithischen Adsorptionsmaterials in Form von aus einer Agglomeration mit mindestens einem organischen oder anorganischen Bindemittel erhaltenen Agglomeraten, umfassend mindestens einen mesoporösen Zeolith vom A-Typ mit einem durch 29-Silicium-Festkörper-Kernspinresonanz (NMR) gemessenen Si/Al-Verhältnis von 1,00 +/- 0,05 und einer durch Stickstoffadsorption gemessenen externen Oberfläche zwischen 40 $m^2.g^{-1}$ und 400 $m^2.g^{-1}$, vorzugsweise zwischen 60 $m^2.g^{-1}$ und 200 $m^2.g^{-1}$, wobei die Grenzen eingeschlossen sind, wobei es sich bei der externen Oberfläche um die Differenz zwischen der BET-Oberfläche und der Mikroporenoberfläche handelt, wobei die Mikroporenoberfläche nach der t-Plot-Methode berechnet wird, zur Trennung und/oder Trocknung von Gasen, wobei das Adsorptionsmaterial

- eine durch Stickstoffadsorption gemessene und in $m^2$ pro Gramm Adsorptionsmaterial ausgedrückte externe Oberfläche zwischen 40 $m^2.g^{-1}$ und 200 $m^2.g^{-1}$ und ganz besonders zwischen 50 $m^2.g^{-1}$ und 200 $m^2.g^{-1}$, wobei es sich bei der externen Oberfläche um die Differenz zwischen der BET-Oberfläche und der Mikroporenoberfläche handelt, wobei die Mikroporenoberfläche nach der t-Plot-Methode berechnet wird,
- einen Gehalt an Nicht-Zeolith-Phase (NZP) derart, dass 0 < NZP ≤ 30 Gew.-%, vorzugsweise 3 Gew.-% ≤ NZP ≤ 25 Gew.-%, weiter bevorzugt 3 Gew.-% ≤ NZP ≤ 20 Gew.-%, vorteilhafterweise 5 Gew.-% ≤ NZP ≤ 20 Gew.-%, noch besser 7 Gew.-% ≤ NZP ≤ 18 Gew.-%, gemessen durch XRD (Röntgenbeugung), bezogen auf das Gesamtgewicht des Adsorptionsmaterials,
- ein nach der Barrett-Joyner-Halenda(BJH)-Methode unter Anwendung der ISO-Norm 15901-2 (2007) bestimmtes Mesoporenvolumen zwischen 0,07 $cm^3.g^{-1}$ und 0,18 $cm^3.g^{-1}$, vorzugsweise zwischen 0,10 $cm^3.g^{-1}$ und 0,18 $cm^3.g^{-1}$ und weiter bevorzugt zwischen 0,12 $cm^3.g^{-1}$ und 0,18 $cm^3.g^{-1}$, noch weiter bevorzugt zwischen 0,14 $cm^3.g^{-1}$ und 0,18 $cm^3.g^{-1}$, wobei die Grenzen eingeschlossen sind,
- ein (Vmikro-Vmeso)/Vmikro-Verhältnis zwischen -0,3 und 1,0, wobei die Grenzen nicht eingeschlossen sind, vorzugsweise zwischen -0,1 und 0,9, wobei die Grenzen nicht eingeschlossen sind, vorzugsweise zwischen 0 und 0,9, wobei die Grenzen nicht eingeschlossen sind, weiter bevorzugt zwischen 0,2 und 0,8, wobei die Grenzen nicht eingeschlossen sind, weiter bevorzugt zwischen 0,4 und 0,8, wobei die Grenzen nicht eingeschlossen sind, bevorzugt zwischen 0,6 und 0,8, wobei die Grenzen nicht eingeschlossen sind, wobei Vmikro das nach der Dubinin-Raduskevitch-Methode gemessene Mikroporenvolumen ist und Vmeso das nach der Barrett-Joyner-Halenda(BJH)-Methode bestimmte Mesoporenvolumen ist, aufweist
- und das durch Röntgenfluoreszenz gemäß der Norm NF EN ISO 12677 (2011) gemessene Si/Al-Atomverhältnis des Adsorptionsmaterials zwischen 1,0 und 2,0, vorzugsweise zwischen 1,0 und 1,6 und ganz besonders bevorzugt zwischen 1,0 und 1,4 liegt,

wobei alle Messungen an dem zu mindestens 90 % mit Calcium ausgetauschten Adsorptionsmaterial vorgenommen werden.

**2.** Verwendung nach Anspruch 1, wobei das mindestens eine zeolithische Adsorptionsmaterial ein durch das Dubinin-Raduskevitch-Volumen wiedergegebenes, in $cm^3$ pro Gramm an zeolithischem Adsorptionsmaterial ausgedrücktes Mikroporenvolumen zwischen 0,160 $cm^3.g^{-1}$ und 0,280 $cm^3.g$, vorzugsweise zwischen 0,180 $cm^3.g^{-1}$ und 0,280 $cm^3.g$, vor-

zugsweise zwischen 0,200 $cm^3.g^{-1}$ und 0,280 $cm^3$.g, weiter bevorzugt 0,220 und 0,280 $cm^3$.g, gemessen an dem zu mindestens 90 % mit Calcium ausgetauschten Adsorptionsmaterial, aufweist.

3. Verwendung nach Anspruch 1 oder 2, wobei das zeolithische Adsorptionsmaterial mindestens ein Kation umfasst, das aus den Ionen der Gruppen IA, IIA, IIIA, IB, IIB und IIIB des Periodensystems, den dreiwertigen Ionen der Lanthaniden- oder Seltenerdmetallreihe, dem Zink(II)-Ion, dem Silber(I)-Ion, dem Kupfer(II)-Ion, dem Chrom(III)-Ion, dem Eisen(III)-Ion, dem Ammoniumion und/oder dem Hydroniumion ausgewählt ist, wobei es sich bei den bevorzugten Ionen um die Calcium-, Lithium-, Natrium-, Kalium-, Barium-, Caesium-, Strontium-, Zink- und Seltenerdmetallionen und weiter bevorzugt die Natrium-, Calcium- und Kaliumionen und Mischungen davon handelt.

4. Verwendung nach einem der Ansprüche 1 bis 3 zur Verwendung von Crackgasen.

5. Verwendung nach Anspruch 4, wobei das zeolithische Adsorptionsmaterial mindestens einen mesoporösen Zeolith 3A umfasst.

6. Verwendung nach einem der Ansprüche 1 bis 3 zur Trocknung und/oder Trennung von Kältemitteln, vorzugsweise von H-FKWs und HFO, und vorzugsweise zur Trocknung von 1,1,1,2-Tetrafluorethan und 2,3,3,3-Tetrafluorpropen.

7. Verwendung nach Anspruch 6, wobei das zeolithische Absorptionsmaterial mindestens einen mesoporösen Zeolith A umfasst, der aus Zeolithen 3A, 4A, 5A und Mischungen davon ausgewählt ist.

8. Verwendung nach einem der Ansprüche 1 bis 3 zur Trocknung und/oder Trennung von Luft und technischen Gasen.

9. Verwendung nach Anspruch 8, wobei das zeolithische Absorptionsmaterial mindestens einen mesoporösen Zeolith A umfasst, der aus Zeolithen 3A, 4A, 5A und Mischungen davon ausgewählt ist.

10. Verwendung nach einem der Ansprüche 1 bis 3 zur Reinigung von Olefinen, insbesondere zur Entfernung von Verunreinigungen, vorzugsweise zur Entfernung von sauerstoffhaltigen Verunreinigungen und noch weiter bevorzugt zur Entfernung von Methanol.

11. Verwendung nach Anspruch 10, wobei das zeolithische Absorptionsmaterial mindestens einen mesoporösen Zeolith A umfasst, der aus Zeolithen 3A, 4A, 5A und Mischungen davon, vorzugsweise aus Zeolithen 3A, 4A und Mischungen davon, ausgewählt ist.

12. Verwendung nach einem der Ansprüche 1 bis 3 zur Trennung von Paraffinen.

13. Verwendung nach Anspruch 12, wobei das zeolithische Absorptionsmaterial mindestens einen mesoporösen Zeolith 5A umfasst.

14. Verwendung nach einem der Ansprüche 1 bis 3 zur Trocknung und/oder Reinigung von Synthesegasen, insbesondere zur Herstellung von Wasserstoff.

15. Verwendung nach Anspruch 14, wobei das zeolithische Absorptionsmaterial mindestens einen mesoporösen Zeolith A umfasst, der aus Zeolithen 3A, 4A, 5A und Mischungen davon ausgewählt ist.

## Claims

1. Use, for gas drying and/or separation, of at least one zeolite adsorbent material in the form of agglomerates obtained from an agglomeration with at least one organic or inorganic binder, comprising at least one mesoporous A zeolite having an Si/Al ratio, measured by solid silicon 29 Nuclear Magnetic Resonance (NMR), equal to 1.00 +/- 0.05, and an external surface area, measured by nitrogen adsorption, of between 40 $m^2.g^{-1}$ and 400 $m^2.g^{-1}$, preferably between 60 $m^2.g^{-1}$ and 200 $m^2.g^{-1}$, limits included, the external surface area being the difference between the BET surface area and the micropore surface area, the micropore surface area being calculated by the t-plot method, said adsorbent having:

- an external surface area, measured by nitrogen adsorption and expressed in $m^2$ per gram of adsorbent, between 40 $m^2.g^{-1}$ and 200 $m^2.g^{-1}$, and more particularly between 50 $m^2.g^{-1}$ and 200 $m^2.g^{-1}$, the external surface area being the difference between the BET surface area and the micropore surface area, the micropore surface area being calculated by the t-plot method,
- a non-zeolite phase (PNZ) content such that $0 < PNZ \leq 30\%$, preferably $3\% \leq PNZ \leq 25\%$, more preferably $3\% \leq PNZ \leq 20\%$, advantageously $5\% \leq PNZ \leq 20\%$, even better still $7\% \leq PNZ \leq 18\%$, measured by XRD (X-ray diffraction), by weight relative to the total weight of the adsorbent,
- a mesopore volume, determined by the Barrett-Joyner-Halenda (BJH) method by applying standard ISO 15901-2 (2007), of between 0.07 $cm^3.g^{-1}$ to 0.18 $cm^3.g^{-1}$, preferably between 0.10 $cm^3.g^{-1}$ and 0.18 $cm^3.g^{-1}$, and more preferably between 0.12 $cm^3.g^{-1}$ and 0.18 $cm^3.g^{-1}$, more

preferably between 0.14 $cm^3.g^{-1}$ and 0.18 $cm^3.g^{-1}$ limits included,

• a (Vmicro-Vmeso)/Vmicro ratio of between -0.3 and 1.0, limits not included, preferably between -0.1 and 0.9, limits not included, preferably between 0 and 0.9, limits not included, more preferably between 0.2 and 0.8, limits not included, more preferably between 0.4 and 0.8, limits not included, preferably between 0.6 and 0.8, limits not included, where Vmicro is the micropore volume measured by the Dubinin-Raduskevitch method and Vmeso is the mesopore volume determined by the Barrett-Joyner-Halenda (BJH) method,

• and an Si/Al atomic ratio of the adsorbent, measured by X-ray fluorescence according to standard NF EN ISO 12677 (2011), of between 1.0 and 2.0, preferably between 1.0 and 1.6, and then entirely preferably between 1.0 and 1.4,

all of the measurements being carried out on the absorbent material at least 90% exchanged with calcium.

**2.** Use according to Claim 1, in which said at least one zeolite adsorbent material has a micropore volume, represented by the Dubinin-Raduskevitch volume, expressed in $cm^3$ per gram of zeolite adsorbent material, of between 0.160 $cm^3.g^{-1}$ and 0.280 $cm^3.g^{-1}$, preferably between 0.180 $cm^3.g^{-1}$ and 0.280 $cm^3.g^{-1}$, preferably between 0.200 $cm^3.g^{-1}$ and 0.280 $cm^3.g^{-1}$, more preferably 0.220 $cm^3.g^{-1}$ and 0.280 $cm^3.g^{-1}$, measured on the adsorbent material at least 90% exchanged with calcium.

**3.** Use according to either one of Claims 1 and 2, said zeolite adsorbent material comprising at least one cation chosen from the ions of groups IA, IIA, IIIA, IB, IIB and IIIB of the periodic table, the trivalent ions of the lanthanide or rare earth series, the zinc(II) ion, the silver(I) ion, the cupric(II) ion, the chromium(III) ion, the ferric(III) ion, the ammonium ion and/or the hydronium iron, the preferred ions being calcium, lithium, sodium, potassium, barium, caesium, strontium, zinc and rareearth ions and more preferably sodium, calcium and potassium ions, and mixtures thereof.

**4.** Use according to any one of Claims 1 to 3, for drying cracked gases.

**5.** Use according to Claim 4, wherein the zeolite adsorbent material comprises at least mesoporous 3A zeolite.

**6.** Use according to any one of Claims 1 to 3 for drying and/or separating refrigerant fluids, preferably HFCs and HFOs, and preferably drying 1,1,1,2-tetrafluoroethane and 2,3,3,3-tetrafluoropropene.

**7.** Use according to Claim 6, wherein the zeolite adsorbent material comprises at least one mesoporous A zeolite, chosen from 3A, 4A and 5A zeolites, and mixtures thereof.

**8.** Use according to any one of Claims 1 to 3, for drying and/or separating air and industrial gases.

**9.** Use according to Claim 8, wherein the zeolite adsorbent material comprises at least one mesoporous A zeolite, chosen from 3A, 4A and 5A zeolites, and mixtures thereof.

**10.** Use according to any one of Claims 1 to 3, for purifying olefins, in particular for removing impurities, preferably for removing oxygen-bearing impurities, and more preferably for removing methanol.

**11.** Use according to Claim 10, wherein the zeolite adsorbent material comprises at least one mesoporous A zeolite, chosen from 3A, 4A and 5A zeolites, and mixtures thereof, preferably from 3A and 4A zeolites and mixtures thereof.

**12.** Use according to any one of Claims 1 to 3, for separating paraffins.

**13.** Use according to Claim 12, wherein the zeolite adsorbent material comprises at least one mesoporous 5A zeolite.

**14.** Use according to any one of Claims 1 to 3, for drying and/or purifying syngases, in particular for producing hydrogen.

**15.** Use according to Claim 14, wherein the zeolite adsorbent material comprises at least one mesoporous A zeolite, chosen from 3A, 4A and 5A zeolites, and mixtures thereof.

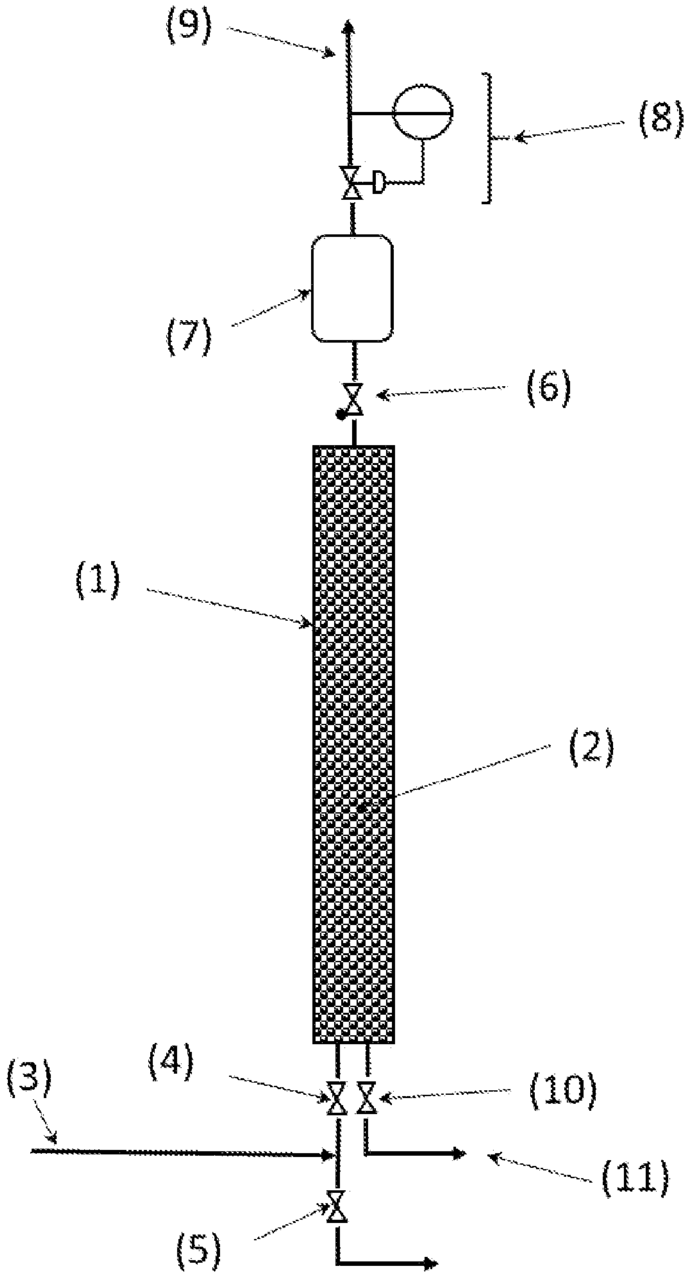


Figure 1

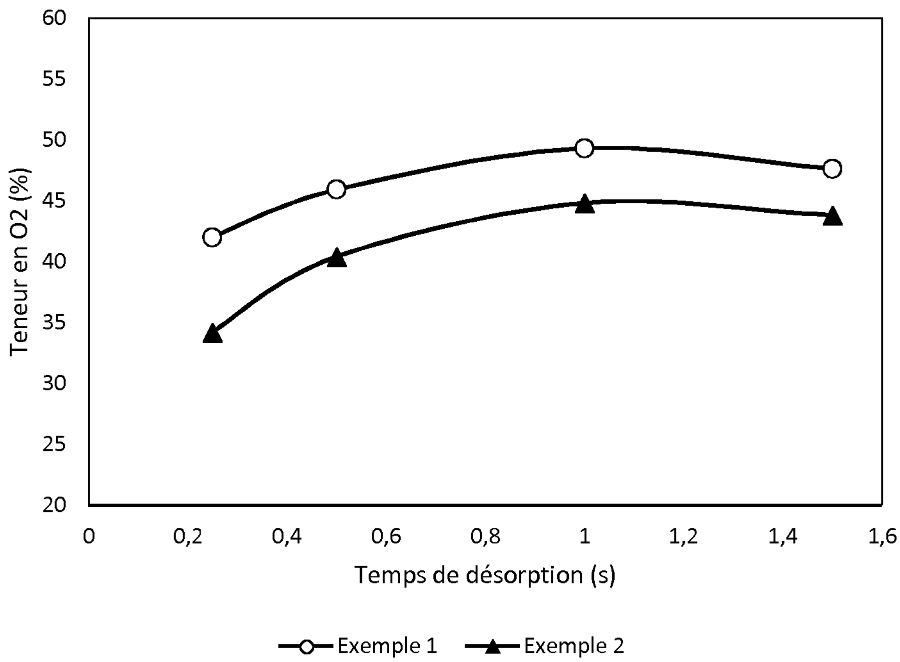
60
55
50
45
40
35
30
25
20
Teneur en O2 (%)
0
0,2
0,4
0,6
0,8
1
1,2
1,4
1,6
Temps de désorption (s)
Exemple 1
Exemple 2

**Figure 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2008152319 A
- US 20130216627 A
- JP 2157119 A
- JP 2002068732 B
- WO 200249742 A
- WO 2008051904 A
- WO 2008109882 A
- EP 1240939 A
- US 6328786 B
- EP 1048345 A
- FR 2516499
- FR 2794993
- US 20120093715 A
- US 20130052126 A
- US 7785563 B
- WO 2007144632 A
- EP 1312406 A
- WO 2007043731 A


### Littérature non-brevet citée dans la description


- **E. ALPAY.** Adsorbent particle size effects in the separation of air by rapid pressure swing adsorption. *Chemical Engineering Science,* 1994, vol. 49 (18), 3059-3075